## Europäisches Patentamt

## European Patent Office

## Office européen des brevets

(11) Publication number:

**0 159 816**
**B1**

# EUROPEAN PATENT SPECIFICATION

(45) Date of publication of patent specification: **27.04.88**

(51) Int. Cl.⁴: **C 03 C 17/23**

(21) Application number: **85302002.2**

(22) Date of filing: **22.03.85**

(54) **Production of infra red reflecting coatings on glass.**

(30) Priority: **29.03.84 GB 8408117**

(43) Date of publication of application:
**30.10.85 Bulletin 85/44**

(45) Publication of the grant of the patent:
**27.04.88 Bulletin 88/17**

(84) Designated Contracting States:
**AT BE DE FR IT**

(56) References cited:
**GB-A-1 101 731**
**US-A-4 022 601**
**US-A-4 182 783**

(73) Proprietor: **PILKINGTON BROTHERS P.L.C.**
**Prescot Road St. Helens**
**Merseyside, WA10 3TT (GB)**

(72) Inventor: **Hargreaves, Edward**
**2, Knowsley Road Rainhill**
**Prescot Merseyside L35 OPA (GB)**
Inventor: **Simpson, Andrew Fraser**
**68 Becconsall Lane Hesketh Bank**
**Preston Lancashire (GB)**

(74) Representative: **Pendlebury, Anthony et al**
**Page, White & Farrer 5 Plough Place New Fetter Lane**
**London EC4A 1HY (GB)**

Courier Press, Leamington Spa, England.

## Description

The invention relates to a process for the production of infra red reflecting fluorine-containing tin oxide coatings on glass.

It is known that fluorine-containing tin oxide coatings of appropriate thickness, for example 100 nm to 1000 nm, on flat glass reflect infra red radiation, i.e. have a low emissivity, whilst transmitting light in the visible part of the spectrum, and that this property makes them useful in energy efficient architectural glazing. It is also known that such coatings may be produced by projecting a tin compound in fine powder form in the presence of a source of fluorine onto the surface of flat glass at a temperature in the range 400° to 650°C. The coatings produced in this way are generally colourless in appearance although, in common with other thin films, they give rise to interference colours in reflection. The interference colours depend on the thickness of the coating, so that variations in thickness across a coating lead to an observable variation in the interference colour seen. The visual impact of the interference colour, and the variations in such colour resulting from variations in thickness of the coating, are generally less the greater the mean thickness of the coating. However, it will be appreciated that, since the coatings absorb visible light, the light transmission of the coated glass is reduced as the thickness of the coating is increased.

U.S. Patent 4182783 relates primarily to a method of vapourising a solid coating reactant which is to be used, in vapour form, to deposit a coating on a hot substrate. The substrate may be glass and is preferably at a temperature in the range 540°C to 705°C. Examples of solid reactants which may be used include organo-metallic compounds, such as alkyl and aryl tin halides, particularly fluorides. The patent describes an apparatus to be used for vapourising the solid reactant and applying the vapour to the substrate, and also refers to the use of the apparatus to direct an unvapourised particulate solid coating reactant against a hot substrate surface to deposit a coating by pyrolytic reaction. This U.S. Patent is not, however, concerned with the problem of obtaining coatings of high infra red reflectivity and high light transmission for a given thickness.

It has now been found that the light transmission of fluorine-containing tin oxide coatings of given thickness produced by projecting an organic tin compound in powder form on to a hot glass surface in the presence of a source of fluorine may be increased, and the infra red reflectivity of the coatings increased, by operating at higher glass temperatures.

According to the present invention, there is provided a process for the production of an infra red reflecting coating on glass by directing on to a hot glass surface an organic tin compound in the form of a finely divided solid which decomposes under the conditions of application to deposit a fluorine-containing tin oxide coating on the glass wherein the tin compound is directed onto the hot glass surface at a glass temperature above 660°C.

It has been found that, in general, the higher the glass temperature above 660°C the higher the light transmission of a coating of given thickness.

Preferably the coating is applied to a continuous ribbon of glass, for example, rolled glass which is hot from the forming process. If the glass is stretched after the coating process, the coating is liable to crack. Although such cracks may not seriously affect the heat reflecting performance of the coated glass, they are not asethetically pleasing and are preferably avoided. It is therefore preferred to apply the coating to the ribbon of glass after any stretching of the ribbon is complete. Thus the coating is preferably applied to the glass at a temperature below 750°C; it is especially preferred to coat the glass at a temperature in the range 680° to 720°C.

The organic tin compound used should be a compound that decomposes under the conditions of application to form fluorine-containing tin oxide. Examples of tin compounds which may be used are alkyl tin oxides, for example butyl tin oxides, and alkyl tin halides of the formula $R_x Sn Hal_{4-x}$ where each R is an alkyl group, preferably containing 1—6 carbon atoms, x is 1, 2 or 3 and Hal represents halogen. When x=1 or 2, the halogen atoms may be the same or different, it is preferred to use non-hygroscopic compounds which are available in dry solid form to provide a free-flowing finely divided solid source of tin. Examples of preferred tin compounds include dibutyl tin oxide and dibutyl tin difluoride.

It is believed that the use of very fine particles of the tin compound results in more uniform coatings, and it is generally preferred to use the tin compound in the form of particles with a maximum particle size below 100 micrometers, and especially below 20 micrometers.

If desired a mixture of tin compounds may be used. By using a mixture of a tin compound containing fluorine and a fluorine-free tin compound, it is possible to regulate the fluorine content of the coating produced.

If the tin compound used does not contain fluorine, or contains insufficient fluorine to provide the desired fluorine content in the coating, a separate source of fluorine may be used, it is preferred to use a source, for example hydrogen fluoride gas, which does not result in the formation of by-products which contaminate the coating.

The oxygen required for the formation of the tin oxide may be provided by the tin compound or compounds used, but it is usually necessary or at least desirable to provide a separate source of oxygen. This may be done by, for example, using air or oxygen as the carrier gas for the solid tin compound. Other carrier gases may be used if desired provided care is taken to ensure that sufficient oxygen is present to ensure formation of tin oxide on thermal decomposition of the tin compound applied to the hot glass.

The invention also includes glass having an infra red reflecting fluorine-containing tin oxide coating produced by a process in accordance with the invention.

The invention is illustrated but not limited by the following Examples. In the examples, the values quoted for light transmission are for transmission of light from a C.I.E. Illuminant C source. The values of emissivity quoted are those obtained by applying the formula

$$\text{Emissivity, } E = \frac{\int_0^\infty e_\lambda B(\lambda,T)d\lambda}{\int_0^\infty B(\lambda,T)d\lambda}$$

where
$e_\lambda$=spectral emittance and
$B(\lambda,T)$=black body spectral energy distribution at 300°K.

The emissivity, E, calculated as above, is related to the infra red reflectivity of the coating such that, in general, the lower the emissivity, the higher the infra red reflectivity.

Example 1

Dibutyl tin difluoride was mixed with 2% by weight of "Cab-o-Sil®" (an amorphous silica available in commerce from Cabot Carbon Limited of Ellesmere Port, England) as a milling additive and flow promoter, and the composition milled in a pin mill to a maximum particle size of less than 100 micrometers. The milled solid was distributed in a stream of air as carrier gas and directed through a slot 6 mm wide onto 6 mm thick hot glass advancing at 5 metres/minute past the slot. The air was supplied at a rate of 0.04 m³ at 45 kPa/cm length of slot/minute, and the milled solid at a rate of 4 gram/cm length of slot/minute. The thickness of the coating, the light transmission of the coated glass and the emissivity of the coated glass were measured. The results obtained at glass temperature of 600°C and 695°C are set out below:

| Temp. °C | Thickness of coating. nm | Transmission % | Emissivity |
|---|---|---|---|
| 600 | 1080 | 59.1 | 0.24 |
| 695 | 1040 | 66.7 | 0.17 |

The coating obtained at 695°C is thinner than the coating obtained at 600°C, but the difference in thickness is not sufficient to account for the substantial increase in light transmission from 59.1% to 66.7% observed on increasing the coating temperature. Moreover, the emissivity of the higher temperature coating is lower indicating an increase in the infra red reflectivity of the coating.

Example 2

The coating process was repeated at a reduced powder supply rate. The air and powder supply rates were 0.04 m³ at 45 kPa/cm length of slot/minute and 2.5 grams/cm length of slot/minute respectively. The properties of the coated product obtained were measured and the results obtained set out below:

| Temp. °C | Thickness of coating. nm | Transmission % | Emissivity |
|---|---|---|---|
| 600 | 750 | 66.9 | .28 |
| 695 | 740 | 71.2 | .16 |

Again, there is a marginal reduction in thickness on increasing the temperature from 600°C to 695°C, but it is not sufficient to account for the significant increase in light transmission from 66.9% to 71.2%. The increased light transmission is accompanied by a reduction in emissivity i.e. an increase in the infra red reflectivity of the coating.

Example 3

Dimethyl tin difluoride was mixed with 2% by weight of "Cab-o-Sil®" as a milling additive and flow promoter, and the composition milled in a jet mill to a maximum particle size of less than 100 micrometers. The milled solid was distributed in a stream of air as carrier gas and directed through a slot 6 mm wide onto 6 mm thick hot glass advancing at 5 metres/minute past the slot. The air was supplied at a rate of 0.04 m³ at

3

0 159 816

45 kPa/cm length of slot/minute, and the milled solid at a rate of 6 grams/cm length of slot/minute. The properties of the coated glass were measured and the results obtained at glass temperature of 600°C and 705°C are set out below.

| Temp. °C | Thickness or coating, nm | Transmission % | Emissivity |
|---|---|---|---|
| 600 | 450 | 74.7 | 0.35 |
| 705 | 440 | 77.8 | 0.20 |

The coating produced at 705°C is marginally thinner than the coating obtained at 600°C, but the difference in thickness is insufficient to account for the increase in light transmission from 74.7% to 77.8%. The increase in light transmission is accompanied by a substantial increase in infra red reflectivity as indicated by the reduction in emissivity from 0.35 to 0.20.

Example 4

A 1:1 mixture by weight of dibutyl tin oxide and dibutyl tin difluoride was mixed with 2% by weight of "Cab-o-Sil®" as a milling additive and flow promoter, and the composition milled in a pin mill to a particle size of less than 100 micrometers. The milled solid was distributed in a stream of air as carrier gas and directed through a slot 6 mm wide and 1 metre long onto 6 mm thick hot float glass advancing at 5 metres/minute past the slot. The air was supplied at the rate of 5 $m^3$/minute and the milled solid at a rate of 300 grams/minute.

The properties of the coated glass were measured and the result obtained at different temperatures (two at each temperatures) set out below. In each case, the thickness of the coating was 700 nm.

| Temp. °C | Transmission % | Emissivity |
|---|---|---|
| 600 | 67.1, 67.1 | 0.30, 0.31 |
| 675 | 68.0, 68.0 | 0.27, 0.27 |
| 725 | 69.4, 69.7 | 0.22, 0.21 |

The infra red reflectivity (as evidenced by the measured emissivity) and light transmission both increase as the temperature is raised. The rate of increase is greater above 675°C, with a fall in average emissivity of 0.035 between 600°C and 675°C, compared to a fall of average emissivity of 0.055 between 675°C and 725°C. Similarly, the average light transmission increases from 67.1% to 68.0% between 600°C and 675°C, but from 68.0% to 69.7% between 675°C and 725°C.

Example 5

Dibutyl tin difluoride was mixed with 2% by weight of "Cab-o-Sil®" as a milling additive and flow promoter, and the composition milled in an Alpine Kolloplex Laboratory Mill 160z mill to a maximum particle size of less than 100 micrometers. The milled solid was distributed at a rate of 300 gm/minute in a stream of 4.7 $m^3$ air/minute as carrier gas and directed through a slot 1.3 m long and 6 mm wide onto a ribbon of 4 mm rolled glass hot from the forming process. The powder was directed onto the glass at a glass temperature of 700°C; the lehr speed of the glass ribbon was 526 m/hour. An infra red reflecting fluorine containing tin oxide coating was formed on the glass surface, the thickness of the coating was measured and found to be 420 nm. The light transmission of the coated glass was 77.3% and the emissivity 0.20, indicating good infra red reflectivity.

**Claims**

1. A process for the production of an infra red reflecting coating on glass by directing onto a hot glass surface an organic tin compound in the form of a finely divided solid which decomposes under the conditions of application to deposit a fluorine-containing tin oxide coating on the glass characterised in that the tin compound is directed onto the hot glass surface at a glass temperature above 660°C.

2. A process according to claim 1 characterised in that the glass temperature is in the range 680°C to 720°C.

3. A process according to claim 1 or claim 2 characterised in that the solid organic tin compound is directed onto a ribbon of rolled glass which is hot from the forming process.

4

**Patentansprüche**

1. Verfahren zur Herstellung einer Infrarot-Reflexionsbeschichtung auf Glas, bei welchem eine organische Zinnverbindung in Form einer feinverteilten Festsubstanz, welche sich unter den Anwendungsbedingungen zersetzt, auf eine heiße Glasoberfläche geleitet wird, um eine Fluor enthaltende Zinnoxid-Beschichtung auf das Glas aufzubringen, dadurch gekennzeichnet, daß die Zinnverbindung bei einer Glastemperatur über 660°C auf die heiße Glasoberfläche geleitet wird.

2. Verfahren nach Anspruch 1, dadurch gekennzeichnet, daß die Glastemperatur im Bereich von 680°C bis 720°C liegt.

3. Verfahren nach Anspruch 1 oder Anspruch 2, dadurch gekennzeichnet, daß die organische Festsubstanz-Zinnverbindung auf ein Band aus Walzglas geleitet wird, welches von dem Formungsverfahren heiß ist.

**Revendications**

1. Procédé pour la production d'un revêtement réflecteur d'infra rouge sur de verre en dirigeant sur une surface de verre chaud un composé organique d'étain sous la forme d'un solide finement divisé qui se décompose sous les conditions d'application pour déposer un revêtement d'oxyde d'étain contenant du fluor sur le verre caractérisé en ce que le composé d'étain est dirigé sur une surface de verre chaud à une température du verre supérieure à 660°C.

2. Procédé suivant la revendication 1 caractérisé en ce que la température du verre se situe dans la fourchette de 680°C à 720°C.

3. Procédé suivant la revendication 1 ou la revendication 2 caractérisé en ce que le composé organique d'étain solide est dirigé sur un ruban de verre laminé qui est chaud en raison du processus de formage.